# EUROPEAN PATENT APPLICATION

(11) **EP 0 770 661 A1**
(43) Date of publication of application: **02.05.1997**
(21) Application number: 96307766.4
(22) Date of filing: 28.10.1996
(51) Int. Cl.: C09K 7/02, C01B 33/22, C10M 169/04

(54) **Lubricant for drilling mud**

(30) Priority: 27.10.1995 GB 9522076; 27.10.1995 GB 9522063
(71) Applicant: B W MUD LIMITED, Aberdeen AB1 4AD (GB)
(72) Inventor: Chapman, John, c/o B W Mud Limited, West Tullos, Aberdeen, AB1 4AD (GB); Ward, Ian, c/o B W Mud Limited, West Tullos, Aberdeen, AB1 4AD (GB)
(74) Representative: Pattullo, Norman

(57) **Abstract**

A lubricant suitable for use with water based drilling mud, the lubricant comprising an ester and being dispersible or soluble in water based drilling mud. The lubricant may comprise an ester which may be modified to be dispersible or soluble in water by blowing oxygen or air through it or by heating in the presence of oxygen or air eg; "blown oil" process.

In another aspect of the present invention there is provided a drilling mud comprising an aqueous solution of between 1 and 30 weight percent silicate wherein the silicate comprises at least potassium silicate and wherein the mud is capable of assisting drilling through and stabilising chalk formations.

## Description

This invention relates to water based drilling muds and additive components.

In the drilling of a well into the earth, there is commonly employed a drill string having a drill bit connected to the lower end thereof. The drill string is rotated to rotate the drill bit and form a well or wellbore in the earth by cutting and breaking the earth formation which it contacts. Drilling fluid is conventionally circulated down the drill string and through ports provided in the drill bit and back to the surface through the annulus formed between the drill string and the wall of the well. The circulating drilling fluid performs numerous functions including removing the cuttings from the well, cooling the bit, and applying hydrostatic pressure upon the penetrated earth formation to control fluids contained under pressure therein.

"Drilling muds" having either an oil base or a water base are commonly utilized as drilling fluids. These drilling muds are normally treated to provide desired density and rheological properties which make them particularly suitable for use in drilling wells. For example, drilling muds may be treated to increase the density by adding such materials as barium sulphate (barite), lead sulfide (galena) and iron oxide (haematite). As the search for oil now requires the drilling of extremely deep and highly, deviated/horizontal wells often located offshore, in the arctic or in difficult earth formations, increasing emphasis is being placed on improved specially designed formulations, to improve the lubricity and wear characteristics of water based muds.

In this field it is already known that modified triglycerides are effective lubricants in conventional water based drilling fluids. (Ref: HCH Darley and G R Gray. Composition and Properties of Drilling and Completion Fluids). Various products based on esters including vegetable oils or oils of other natural origin which have been chemically modified to allow them to be water dispersible or soluble, are used in water based muds to reduce torque and drag and reduce wear arising from steel to steel friction particularly when drilling highly deviated and extended reach wells. These products have also been found to have environmental advantages in that they are readily biodegradable.

This has the disadvantage that the above lubricants when used in water based muds with high alkalinity (high pH) quickly hydrolyse and become less effective. Soaps and other hydrolysis products are produced which adversely affect the other properties of the mud.

These lubricants are also adversely affected by alkaline contaminants in muds such as cement.

In this field it is also already known that the use of sodium, or potassium, or mixed alkali metal silicates provide a drilling mud with properties whereby the hydration, swelling, heaving and dispersion of shales and clays is inhibited. The addition of these products help to seal fractures in shales and sandstones and increases the pH of the drilling mud. Silicate additives to drilling muds have been used extensively since the 1930's in the sole application to drill "heaving shales".

However, silicate containing muds, in particular those containing potassium silicate have not been used to specifically drill through and stabilise chalk formations.

It is another object of the present invention to provide drilling mud which contains mixed metal silicates to improve drilling performance in chalk formations.

It is another object of the invention to provide a high pH drilling mud with improved lubricity and wear characteristics.

In one aspect of the present invention there is provided a lubricant suitable for use with water based drilling mud, the lubricant comprising an ester and being dispersible or soluble in water based drilling mud.

The lubricant may be readily biodegradable with >60% aerobic biodegradability.

The ester may be modified to be dispersible or soluble in water by blowing oxygen or air through it or by heating in the presence of oxygen or air. This process is known as the "blown oil" process.

The ester may be modified by an oxidation or polymerisation process.

Preferably the lubricant comprises an ester of a fatty acid and alcohol, at least one of which has branched carbon chains.

The ester may be "sterically hindered" to hydrolysis in an aqueous medium.

Preferably at least one of the fatty acid ester or the alcohol contains at least one unsaturated linkage.

The fatty acid may suitably contain from 1 to 24 carbon atoms.

The alcohol may suitably contain from 1 to 24 carbon atoms.

The ester may be modified by an acidification process such as sulphonation, sulphation or nitration.

The invention further provides a water based drilling mud comprising between 0.5 and 25% weight of the lubricant described herein.

In another aspect of the present invention there is provided a silicate composition for use in drilling mud for drilling through and stabilising chalk comprising an aqueous solution of between 1% and 30% silicate by weight, wherein the silicate comprises at least potassium silicate.

The invention further provides a drilling mud for use in drilling mud comprising a silicate comprising as described herein.

Preferably the drilling mud further comprises alkali metal hydroxides such as sodium or potassium hydroxides.

In one embodiment the silicates may comprise only potassium silicate.

Alternatively, the silicates may comprise mixed sodium and potassium silicates.

The molar ratios of the silicates may range from 0.5:1 SiO₂ : M₂O to 3.8:1 SiO₂ : M₂O wherein M = K (potassium) and may also include Na (sodium).

The K₂O content may vary from 1 to 100% of total M₂O.

Preferably the drilling mud may further comprise viscosifiers.

Suitable viscosifiers include clays or polymers.

Preferably the drilling mud may further comprise fluid loss reducers such as polyanionic cellulose or starch.

The drilling mud may further comprise weighting agents such as barite or metal oxides.

The drilling mud containing lubricant has lower torque and drag and there is reduced steel-steel friction whilst drilling with the mud. The lubricant is based on a biodegradable oil (ester) and is environmentally friendly (low toxicity).

The lubricant reduces foaming tendency in the mud (defoamer) and is also able to stablise muds to high temperature.

The lubricant is more stable to combination of temperature/high pH and is able to be used in muds for high temperature wells.

The lubricant is more stable to contaminants such as magnesium and/or calcium salts and cement.

The lubricant is particularly suitable for highly inhibitive "silicate muds".

The use of potassium silicate or mixed silicates which include potassium have a performance advantage over standard water based muds when drilling chalk formations.

The competency of the wellbore will be increased when these fluids are used. A more in-gauge wellbore will be achieved.

Cuttings of chalk will be larger and will be more easily removed from the circulating fluid.

Cementation of casing will be improved in holes drilled using this fluid, cement usage will be reduced in holes drilled using this fluid. Achieving inclination of the wellbore by directional drilling will be more effective in holes drilled using this fluid. Sealing of natural or induced fractures will be improved when using this fluid.

While further modifications and improvements may be made without departing from the scope of this invention, the following is a description of one or more examples of the invention, with reference to the accompanying tables and figures wherein:
Figure 1: Illustrates the comparison of lubricants in a salt saturated silicate drilling fluid (before hot rolling).
Figure 2: Illustrates the comparison of lubricants in a salt saturated silicate drilling fluid (after hot rolling at 200 F).
Figure 3: Illustrates Lubricant A in a Silicate mud.
Figure 4: Illustrates Lubricant B in a Silicate mud.

### Example 1

A lubricant based on a "sterically hindered" ester, Lubricant A modified to give water dispersibility or solubility in water based mud.

The ester is derived preferably from a long chain fatty acid (carbon number C:1-24) and an alcohol (carbon number C:1-24) in which a degree of branching in either acid and/or alcohol carbon chains is present.

The ester may be chemically modified by reaction of an unsaturated component of the carbon chains by oxidation, polymerization or other reaction with oxygen (so called "Blown" oil process) or acidising process (sulphonation, sulphation, nitration).

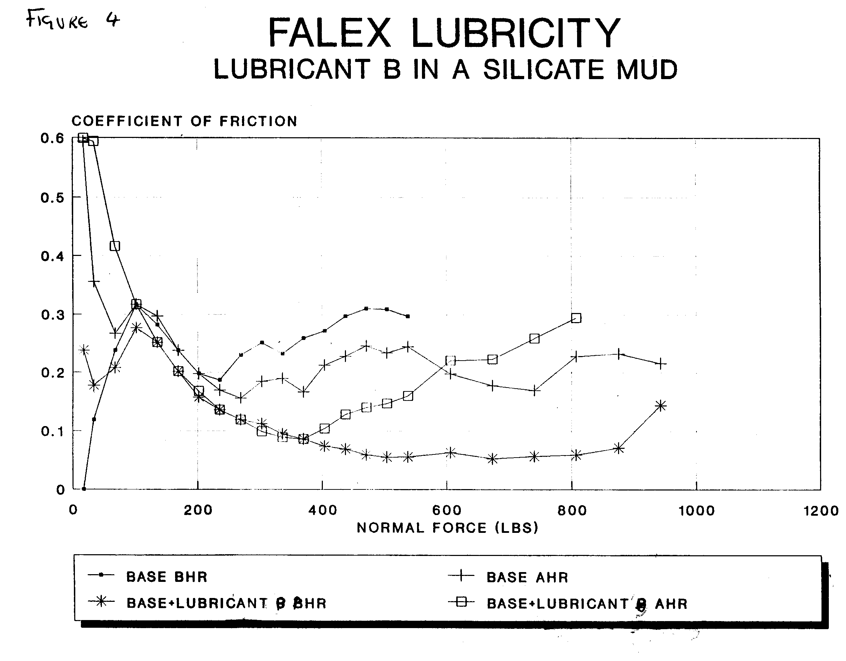

A "blown" ester of iso-octyl alcohol and oleic acid (Lubricant A) having a viscosity of 80 cSt at 20°C has been tested in a high pH silicate mud (pH 11.7). The results have been compared with those for a product based on a triglyceride (Lubricant B), see Figure 4.

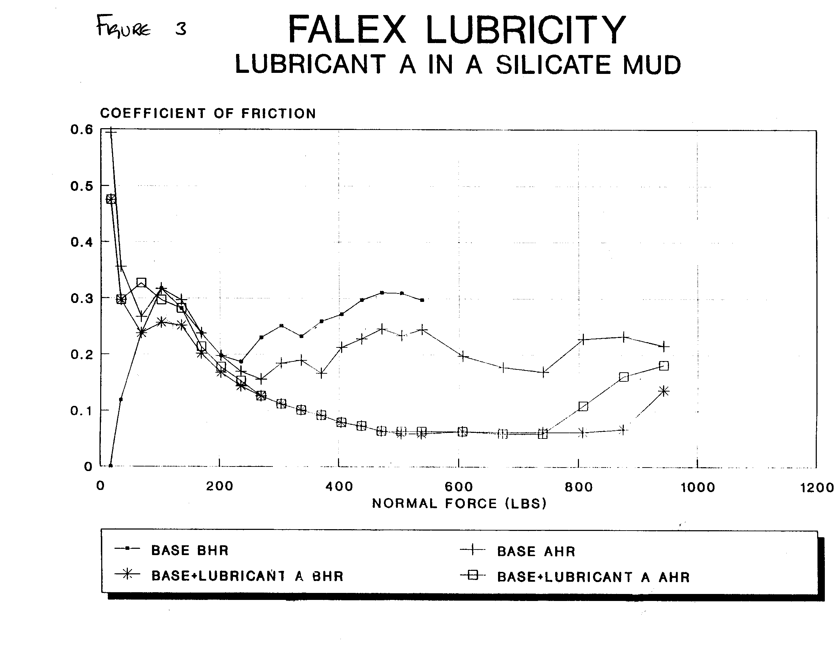

The lubricity of the muds was tested on a Falex lubricity tester before and after ageing at 200°F for 16 hours (see Figures 3 & 4). The aged mud containing Lubricant B showed loss of performance at high load compared to Lubricant A which remained stable under these conditions.

### Example 2

Comparison of stability and lubricity of new lubricant (lubricant A) with a commercial alternative.

A highly inhibitive silicate water based drilling fluid was used for the tests with a high pH of approximately 11.5:

**Table 1**

| | |
|---|---|
| Saturated Salt Brine (s.g 1.20) | 0.8287 bbls |
| Soda Ash | 0.15 ppb |
| Caustic Soda | 0.15 ppb |
| RAC (R) * | 0.7 ppb |
| PAC (SL) * | 0.5 ppb |
| Xanthan Polymer | 0.75 ppb |
| Sodium Silicate Solution | 30 ppb |
| Drilled Solids | 10 ppb |
| Barite | 72 ppb |
| Salt | 6.1 ppb |
| Lubricant | 15 ppb |

| | |
|---|---|
| *Polyanionic cellulose | |
| ppb: pounds per barrel bbls: barrels | |

Lubricant A comprises a lightly "Blown" iso-octyl oleate (2-Ethylhexyl Oleate, an ester of 2-ethyhexanol and commercial oleic acid), a pale yellow liquid, density 0.91 and kinematic viscosity of 80mm²/sec at 20°C. The lubricant is readily biodegradable (Aerobic biodegradability >90% after 28 days, OECD 306)

Lubricant C is a commercial ester based product.

Drilling fluids containing these lubricants were tested according to API methods immediately on make-up and again after a laboratory ageing process designed to simulate downhole well conditions and consisting of a 16 hour hot rolling in a pressurised cell at 200°F.

The drilling fluids were tested for rheology @ 120°F with a Fann Viscometer and their appearance noted. Fluid loss properties on the aged fluids were determined at ambient temperatures.

Lubricity of the fluids was determined on a Falex pin and vee block lubricity tester (ASTM D2670-88). The fluids were tested at a steadily increasing applied load until film failure occurred. The lubricants effectiveness was assessed from two derived parameters; the (steady) coefficient of friction and film strength.

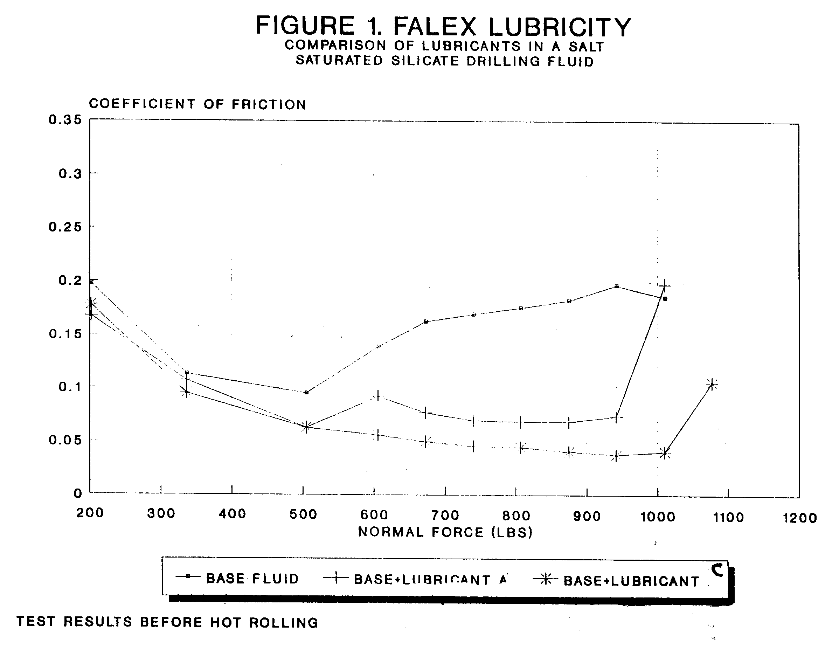

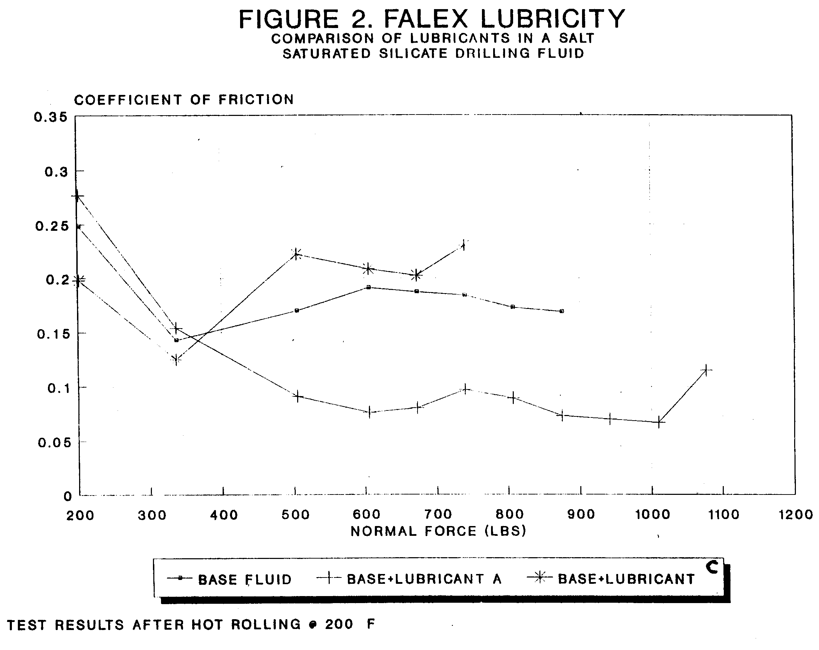

Table 2 shows the rheological and fluid loss data obtained with each lubricant together with the appearance of the fluids. Table 3 gives the lubricity parameters for the fluids. Figure 1 shows the Falex lubricity before ageing and Figure 2 shows the lubricity after ageing.

### lubricity after ageing.

An effective lubricant is demonstrated by a lowering of the C.F. compared to the base fluid, typically to below 0.1 and a high film strength as typified by a high normal force prior to a sudden increase in C.F. Test results indicate Lubricant C is an effective lubricant which as a minimal effect on drilling fluid properties when initially made-up. The lubricant effect is, however, lost after ageing and chemical changes are apparent which adversely affect the drilling fluid properties. Lubricant A, on the other hand, remains an effective lubricant both before and after ageing at 200°F.

Surprisingly, the lubricant is readily biodegradable in standard tests but shows good stability in the drilling fluid. A lubricant with this combination of environmentally friendly characteristics together with stability is highly desirable and particularly beneficial for use in inhibitive water based mud systems. These offer an alternative to oil based systems, which are considered potentially detrimental to the environment.

**Table 2**

| Comparison of Lubricant Drilling Fluid Properties in a Silicate Drilling Fluid | | | | | | |
|---|---|---|---|---|---|---|
| | **Base Fluid** | | **Base Fluid + Lubricant A** | | **Base Fluid + Lubricant C** | |
| | **BHR** | **AHR** | **BHR** | **AHR** | **BHR** | **AHR** |
| Fann Viscometer Speed | | | | | | |
| 600 rpm | 67 | 59 | 78 | 66 | 75 | 75 |
| 300 rpm | 47 | 42 | 57 | 46 | 55 | 54 |
| 200 rpm | 39 | 33 | 47 | 38 | 46 | 44 |
| 100 rpm | 27 | 23 | 32 | 26 | 33 | 32 |
| 6 rpm | 8 | 7 | 9 | 7 | 9 | 10 |
| 3 rpm | 5 | 4 | 7 | 4 | 7 | 8 |
| PV | 20 | 17 | 21 | 20 | 20 | 21 |
| YP | 27 | 25 | 36 | 26 | 35 | 33 |
| Gels | 6/11 | 5/8 | 7/12 | 6/7 | 7/12 | 8/11 |
| API Fluid Loss (mls) | - | 3.0 | - | 3.6 | - | 4.0 |
| Foam | 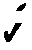 | 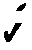 | 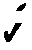 | 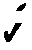 | 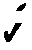 | 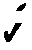 |
| Appearance | 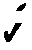 | 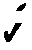 | 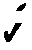 | 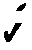 | 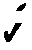 | X* |
| pH | 11.46 | 11.37 | 11.27 | 11.20 | 11.24 | 10.76 |
| 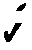 - Satisfactory, x - unsatisfactory, * - Pasty appearance with fatty deposits and surface crust BHR - Before hot rolling AHR - After hot rolling PV - Plastic Viscosity (m.Pa.s) YP - Yield Point (lb/100ft²) Gels - (10s/10m)(lb/100 ft²) | | | | | | |

**Table 3**

| Falex Lubricity Parameters | | | | |
|---|---|---|---|---|
| | | **Base Fluid** | **Base + Lubricant A** | **Base + Lubricant C** |
| BHR | C.F. | 0.180 | 0.075 | 0.040 |
| | Film Strength (lbs) | 0 | 950 | 1211 |
| AHR | C.F. | 0.170 | 0.075 | 0.210 |
| | Film Strength (lbs) | 0 | 1050 | 0 |

### Example 3

Tests in a conventional water based drilling fluid. The stability of the new lubricant on contamination of the fluid with cement.

A conventional salt saturated drilling fluid was used:

**Table 4**

| Sodium Chloride Brine @ 9.5 ppg | |
|---|---|
| Caustic Soda | 0.16 ppb |
| PAC (SL) | 1.0 ppb |
| Starch | 4.2 ppb |
| Xanthan Polymer | 1.11 ppb |
| Lubricant | 8 ppb |

Lubricant A is the new ester lubricant described above.
Lubricant B is a commercial product based on a natural triglyceride oil.

Drilling fluids containing the above were subjected to standard API tests before and after hot rolling at 200°F. A further sample of each fluid was contaminated with 12.5 ppb cement and hot rolled. Falex lubricity was determined on each fluid.

The Tables 5, 6 and 7 show the results of the tests.

Falex lubricity data and API test indicate that Lubricant A is comparable in performance to the commercial product in the base fluid before and after hot rolling. After contamination Lubricant A fluid remains stable and the product chemically virtually unchanged whereas Lubricant B has gelled and precipitated from the fluid.

**Table 5**

| Comparison of Lubricants in a Conventional Salt Saturated Drilling Fluid | | | | | | |
|---|---|---|---|---|---|---|
| | **Base** | | **Base + Lubricant A** | | **Base + Lubricant B** | |
| | **BHR** | **AHR** | **BHR** | **AHR** | **BHR** | **AHR** |
| Weight (ppg) | 9.5 | | | | | |
| 600 rpm | 33 | 20 | 34 | 31 | 35 | 31 |
| 300 rpm | 23 | 14 | 24 | 22 | 25 | 22 |
| 200 rpm | 19 | 12 | 20 | 19 | 21 | 19 |
| 100 rpm | 14 | 8 | 14 | 15 | 15 | 14 |
| 6 rpm | 4 | 2 | 5 | 6 | 6 | 5 |
| 3 rpm | 3 | 1 | 4 | 4 | 5 | 3 |
| PV | 10 | 6 | 10 | 9 | 10 | 9 |
| YP | 13 | 8 | 14 | 13 | 15 | 13 |
| Gels | 4/6 | 2/3 | 5/6 | 5/6 | 5/7 | 4/6 |
| API (mls) | - | 19.0 | - | 22.5 | - | 17.5 |
| Foam | None | Moderate | None | None | None | None |
| Appearance | - | - | - | Good | - | Good |
| ppg - pounds per gallon | | | | | | |

**Table 6**

| Contamination of Drilling Fluids Containing Lubricant | | |
|---|---|---|
| | Base + Lubricant A | Base + Lubricant B |
| Cement Contamination | Filtered easily through 40 mesh screen. No solids retained. No visible signs of degradation | Gelled particles on cell wall would no pass easily through 40 mesh screen. Soft gel particles retained. Degradation of lubricant |
| Rating | 4/5 | 2 |
| Rating 5 = Good 1 = Poor | | |

**Table 7**

| Falex Lubricity Parameters | | | | |
|---|---|---|---|---|
| | | **Base Fluid** | **Base + Lubricant A** | **Base + Lubricant B** |
| BHR | C.F. | 0.24 | 0.05 | 0.05 |
| | Film Strength (lbs) | 0 | 970 | 860 |
| AHR | C.F. | 0.24 | 0.06 | 0.06 |
| | Film Strength (lbs) | 0 | 970 | 980 |

### Example 4

An initial formulation is made from the fresh or saline water containing the salts sodium chloride, or potassium chloride or sodium nitrate or tetrapotassium pyrophosphate or alkali metal formates or mixtures thereof. Concentrations of these salts range from nil to saturated solutions.

To this water or brine is added alkali metal silicates in the concentration of up to 30% by weight. The alkali metal silicate may be added as solid or as a solution in water.

These silicates may be mixed sodium and potassium silicates or pure potassium silicate.
The molar ratios of the individual silicates may vary from 0.5:1 Si0₂:M₂O up to 3.8:1 SiO₂.M₂O where M=Na,K. The molar ratios of the component silicates ie sodium silicate and potassium silicate may vary within the overall blend but will fall within the above molar ratios. K₂O conent as a percentage of total alkali will vary from 1-100%.

Alkali metal hydroxides usually sodium hydroxide or potassium hydroxide are added to the formulation. Other products which supply a source of free hydroxide ions may also be used.

### Typical Formulations

| | | |
|---|---|---|
| a) | Water | 85-99% |
| | Potassium silicate | 1-15%w/v |
| | Sodium hydroxide | 0.5-5kg/m³ |
| | Potassium chloride | 0-150kg/m³ |
| b) | Water | 85-99% |
| | Mixed sodium/potassium silicate | 1-15%w/v |
| | Sodium hydroxide | 0.5-5kg/m³ |
| | Potassium chloride | 0-320kg/m³ |
| c) | Water | 85-99% |
| | Mixed sodium/potassium silicate | 1-15%w/v |
| | Sodium hydroxide | 0.5-5kg/m³ |
| d) | Water | 85-99% |
| | Potassium silicate | 1-15%w/v |
| | Sodium hydroxide | 0.5-5.0kg/m³ |

Viscosifiers consisting of clays or polymers may or may not be added to the formulation but do not effect the basic performance of the invention.

Fluid loss reducers of polymeric, starch or particulate composition may or may not be added to the formulation but do not effect the basic performance of the invention.

Weighting agents such as barite or metal oxides may or may not be added to the formulation but do not effect the basic performance of the invention.

## Claims

1. A lubricant suitable for use with water based drilling mud, comprising an ester and being dispersible in water based drilling mud.

2. A lubricant as claimed in Claim 1 which is biodegradable with >60% aerobic biodegradability.

3. A lubricant as claimed in any previous claim wherein this ester may be modified to be dispersible or soluble in water by blowing oxygen or air through it or by heating in the presence of oxygen or air.

4. A lubricant as claimed in any preceding claim comprising an ester of a fatty acid and an alcohol, at least one of which has branched carbon chain.

5. A lubricant as claimed in Claim 4 where in at least one of the fatty acid ester or alcohol contains at least one unsaturated linkage.

6. A lubricant as claimed in Claims 4 or 5 wherein the fatty acid contains from 1 to 24 carbon atoms.

7. A lubricant as claimed in preceding claim where the alcohol contains from 1 to 24 carbon atoms.

8. A lubricant as claimed in any preceding claim where the ester is "sterically hindered" to hydrolysis in an aqueous medium.

9. A lubricant as claimed in any preceding claim wherein the ester is modified by an oxidation or polymerisation process.

10. A lubricant as claimed in any preceding claim wherein the ester may be modified by an acidification process such as sulphonation, sulphation or nitration.

11. A lubricant for use in a water based drilling mud comprising between 0.5 and 25 weight percent of the lubricant as described in any previous claim.

12. A silicate composition comprising an aqueous solution of between 1% and 30% silicate by weight, wherein the silicate comprises at least potassium silicate.

13. A silicate composition as claimed in Claim 12 further comprising alkali metal hydroxides such as potassium or sodium hydroxides.

14. A silicate composition as claimed in Claim 12 or 13 comprising mixed sodium and potassium silicates.

15. A silicate composition as claimed in Claims 12 to 14 wherein the molar ratios of the silicates may range from 0.5:1, Si0₂:M₂0 to 3.8:1 SiO₂:M₂0, wherein M = K (potassium) or Na (sodium).

16. A silicate composition as claimed in Claims 12 to 15 where the potassium oxide content may vary from 1 - 100% of total M₂0.

17. The silicate composition as claimed in Claims 12 to 16 further comprising viscosifiers.

18. A silicate composition as claimed in Claim 17 wherein the viscosifiers include clays and/or polymer.

19. A silicate composition as claimed in Claims 12 to 18 further comprising fluid loss reducers such as polymeric starch or of particulate composition.

20. A silicate composition as claimed in Claims 12 to 19 which further comprise weighting agents such as barite or metal oxide.
